# EUROPÄISCHE PATENTSCHRIFT

(11) **EP 0 952 960 B1**
(45) Veröffentlichungstag und Bekanntmachung des Hinweises auf die Patenterteilung: **04.06.2003**
(21) Anmeldenummer: 97944759.6
(22) Anmeldetag: 14.08.1997
(51) Int. Cl.: C01B 31/08, B01J 20/20, B01J 21/18

(54) **KÖRNIGE AKTIVKOHLE AUS DESTILLATIONSRÜCKSTÄNDEN**
GRANULATED ACTIVATED CARBON FROM DISTILLATION RESIDUES
CHARBON ACTIF GRANULE ISSU DE RESIDUS DE DISTILLATION

(30) Priorität: 20.08.1996 DE 19633437; 23.08.1996 DE 19634115; 05.12.1996 DE 19650414; 20.12.1996 DE 19653238
(43) Veröffentlichungstag der Anmeldung: 03.11.1999
(73) Patentinhaber: MHB Filtration GmbH & CO. KG, 40699 Erkrath (DE)
(72) Erfinder: DE RUITER, Ernest, D-51381 Leverkusen (DE); KAMES, Jost, Heiner, D-42781 Haan (DE); HEUBERGER, Gerhard, D-40627 Düsseldorf (DE)
(74) Vertreter: Voth, Gerhard
(86) Internationale Anmeldenummer: EP9704459
(87) Internationale Veröffentlichungsnummer: WO98007655

(56) Entgegenhaltungen:
- EP-A- 0 278 061
- EP-A- 0 480 255
- DE-A- 1 567 491
- DE-A- 3 727 642
- FR-A- 2 242 331
- GB-A- 753 872
- GB-A- 893 495
- GB-A- 942 645
- US-A- 4 131 566
- US-A- 4 954 469
- CHEMICAL ABSTRACTS, vol. 82, no. 10, 10.März 1975 Columbus, Ohio, US; abstract no. 61244, MIYAZAKI TANAKE ET AL.: "Foam-type activated carbon from polymer foam" XP002049526 & JP 49 079 997 A (MITSUBISHI CHEMICAL INDUSTRIES CO. LTD) 1.August 1974
- CHEMICAL ABSTRACTS, vol. 115, no. 2, 15.Juli 1991 Columbus, Ohio, US; abstract no. 11745, SAITO KAZUO: "Activated carbon and its manufacture" XP002049527 & JP 03 054 109 A (NISSHINBO INDUSTRIES INC.) 8.März 1991
- CHEMICAL ABSTRACTS, vol. 92, no. 20, 19.Mai 1980 Columbus, Ohio, US; abstract no. 168436, NISHIJIMA AKIO ET AL.: "Treatment of flue gas" XP002049563 & JP 54 139 880 A (AGENCY OF INDUSTRIAL SCIENCES AND TECHNOLOGY) 3.Oktober 1979

## Beschreibung

Die vorliegende Erfindung betrifft ein Verfahren zur Herstellung von körniger, insbesondere kugelförmiger Aktivkohle.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt, führen zu einem steigenden Bedarf an Aktivkohle.

Aktivkohle wird im allgemeinen durch Schwelung (Carbonisierung, Pyrolyse) und anschließende Aktivierung kohlenstoffhaltiger Verbindungen erhalten, wobei solche Verbindungen bevorzugt werden, die zu ökonomisch vernünftigen Ausbeuten führen, denn die Gewichtsverluste durch Abspalten flüchtiger Bestandteile beim Schwelen und durch den Abbrand beim Aktivieren sind erheblich.

Aber auch die Beschaffenheit der erzeugten Aktivkohle, fein- oder grobporig, fest oder brüchig, hängt vom Ausgangsmaterial ab; übliche Ausgangsmaterialien sind Kokosnußschalen, Holzabfälle, Torf, Steinkohle, Peche, aber auch besondere Kunststoffe, die u.a. bei der Herstellung von Aktivkohlegeweben eine gewisse Rolle spielen.

Aktivkohle wird in verschiedenen Formen verwendet: Pulverkohle, Kornkohle, Formkohle und seit Ende der siebziger Jahre auch Kugelkohle. Kugelförmige Aktivkohle hat gegenüber Pulver-, Splitter- und Kornkohle eine Reihe von Vorteilen, die sie für bestimmte Applikationen wertvoll oder sogar unverzichtbar macht. Kugelkohle ist wegen ihrer speziellen Form, aber auch wegen der extrem hohen Abriebfestigkeit, beispielsweise für besondere Einsatzgebiete, wie z.B. Flächenfilter für Schutzanzüge gegen chemische Gute und Filter für niedrige Schadstoffkonzentrationen in großen Luftmengen, sehr gefragt. So kann bei der Beladung von retikulierten, großporigen Polyurethanschäumen mit Aktivkohle gemäß der DE-A1-38 13 563 nur eine gut rieselfähige Kohle eingesetzt werden, wenn auch die inneren Schichten des Schaumstoffmaterials optimal belegt werden sollen. Bei der Herstellung von Schutzanzügen gegen chemische Gifte in Anlehnung an die DE-C3-33 04 349 kann ebenfalls nur eine hoch abriebfeste Kohle eingesetzt werden, und nur die Kugelkohle erfüllt diese Anforderung.

Kugelkohle wird heute noch meist durch ein mehrstufiges und daher sehr aufwendiges Verfahren hergestellt. Beispielsweise wird in Anlehnung an die US-A-1 468 982 die Kugelkohle in einem mehrstufigen Verfahren ausschließlich aus Bitumen hergestellt. Das mehrstufige Verfahren ist sehr kostenintensiv und der damit verbundene hohe Preis dieser Kugelkohle verhindert viele Anwendungen, bei denen sie aufgrund ihrer Eigenschaften eigentlich bevorzugt werden müßte.

Es ist deshalb nicht erstaunlich, daß verschiedentlich versucht wurde, eine brauchbare Kugelkohle auf anderem Wege herzustellen.

Aus dem Stand der Technik bekannt ist das Schwelen und Aktivieren von neuen oder gebrauchten lonenaustauschern, die Sulfongruppen enthalten, bzw. das Schwelen ihrer Vorstufen in Gegenwart von Schwefelsäure, wobei die Sulfongruppen bzw. die Schwefelsäure die Funktion eines Vernetzers haben. Solche Verfahren sind u.a. in der DE-A1-43 28 219 und in der DE-A1-43 04 026 sowie in der DE-A1-196 00 237 einschließlich der Zusatzanmeldung DE 196 25 069.2 beschrieben. Nachteilig und problematisch bei diesen Verfahren sind aber insbesondere die großen Mengen an freigesetztem Schwefeldioxid (pro kg Endprodukt etwa 1,5 kg SO₂) sowie die damit u.a. verbundenen Korrosionsprobleme, so daß andere Vernetzungsmöglichkeiten als durch Schwefelsäure wünschenswert erscheinen. Bei der Vernetzung mit Schwefelsäure beträgt die Ausbeute - unabhängig davon, ob von unsulfonierten Vorstufen von Ionenaustauschern oder fertigen Kationenaustauschern ausgegangen wird - etwa 50 %, bezogen auf organisches bzw. polymeres Material; dabei ist es vorteilhaft, durch leichte Luftoxidation während der Schwelung die Vernetzung zu fördern und die nachfolgende Aktivierung zu erleichtern, so daß die Bildung pseudographitischer Zonen unterdrückt wird.

Die EP-A-0 480 255 beschreibt ein Agglomerationsverfahren zur Herstellung eines Katalysators auf Basis von Kohlenstoff und Stickstoff, wobei ein loses Kohlenstoff- oder Aktivkohlepulver zusammen mit polymerisierbaren Isocyanaten granuliert wird. Die Isocyanate werden im Gegensatz zur vorliegenden Erfindung sozusagen nur als "Kitt" bzw. "Kleber" verwendet, um die zunächst losen Kohlepulverteilchen miteinander zu verbinden, nicht aber als Ausgangsstoff für die Kohle selbst, wie dies gemäß der vorliegenden Erfindung der Fall ist. Insbesondere wird das Verfahren gemäß der EP-A-0 480 255 nicht zu Kügelchen führen, weil die Agglomeration unkontrolliert verläuft; jede Abweichung von der Kugelform führt aber zwangsläufig auch zu einer verminderten Abriebfestigkeit. Im Gegensatz zu der EP-A-0 480 255 geht aber die erfindungsgemäße Lehre der vorliegenden Anmeldung bei der Schwelung und Aktivierung bereits von körnigen, insbesondere kugelförmigen Teilchen aus, die ihre Form während des Verfahrens weitestgehend beibehalten. Zudem wird im Gegensatz zur vorliegenden Erfindung gemäß der EP-A-0 480 255 - bedingt durch die Agglomeration - ein Produkt mit relativ großem Porendurchmesser von mehr als 100 nm hergestellt, das folglich praktisch über keinerlei Mikroporen verfügt und aufgrund seiner geringen BET-Oberfläche und seines ungünstigen Porenvolumen/Porenwandfläche-Verhältnisses auch nur geringe Adsorptionseigenschaften besitzt und für diesen Zweck äußerst ungeeignet ist. Vielmehr soll das Produkt der EP-A-0 480 255 als Katalysator eingesetzt werden. Auch aufgrund ihres hohen Graphitanteils von mindestens 90 Gew.-%, der zwar für die Katalyse förderlich sein mag, nicht aber für die Adsorption, sind die Produkte der EP-A-0 480 255 für die Adsorption vollkommen ungeeignet.

Die DE-OS 37 27 642 beschreibt einen Katalysator auf Kohlenstoffbasis, der dadurch gekennzeichnet ist, dass er einen Kohlenstoffgehalt von > 65 Gew.-% und einen Gehalt an schwerlöslichen Oxiden der Metalle Co, Fe, Ni, Cr, V, Mo, W, Cu, Mn und T1 von insgesamt 0,1 bis 10 Gew-% und einen Stickstoffgehalt von 0,5 bis 5 Gew.-% aufweist.

Ein Verfahren zur Herstellung des erfindungsgemässen Katalysators besteht darin, dass eine ungesättigte Kohlenstoff-Kohlenstoff-Bindungen aufweisendes organisches Material in einem ersten Schritt über die Stufe der flüssigen Phase pyrolisiert, das dabei entstandene Produkt nach Abkühlung zerkleinert, mit schwerlöslichen Metalloxiden und/oder schwerlösliche Metalloxide bildenden Verbindungen zusammen mit Bindemitteln und gegebenenfalls Wasser gemischt, einer Formgebung unterzogen und thermisch behandelt wird.

Die Aufgabe der vorliegenden Erfindung besteht nunmehr darin, ein Verfahren zur Herstellung von hochwertiger, körniger, insbesondere kugelförmiger Aktivkohle bereitzustellen, das die Nachteile der Verfahren des Standes der Technik vermeidet.

Ein Ziel der vorliegenden Erfindung liegt also darin, neuartige Ausgangsmaterialien zur Herstellung einer Kugelkohle zu finden, die eine wirtschaftlich akzeptable Umsetzung zu körniger, insbesondere kugelförmiger Aktivkohle auch im industriellen Maßstab ermöglichen.

Wichtig ist, daß das Ausgangsmaterial für die Schwelung beim Schwelen nicht zusammensintert, so daß nach dem Schwelen eine wirtschaftlich vertretbare Menge Rückstand vorhanden ist, und daß dieser Rückstand zu Aktivkohle aktiviert werden kann. Das alles erfordert eine starke Vernetzung, die nicht nur das Ausgangsmaterial unschmelzbar macht, sondern auch die durch Abspaltung flüchtiger Bestandteile gebildeten Hohlräume mit Wandabständen von oft nur wenigen Angström quasi "einfriert". Insbesondere von Bedeutung ist die Vernetzung bei Temperaturen unterhalb von 400 °C, um so einen möglichst hohen Anteil an Pyrolyserückstand zu erhalten.

Wie die Forschungen der Anmelderin jetzt ergeben haben, eignen sich als Ausgangsmaterialien zur Herstellung für körnige, vorzugsweise kugelförmige Aktivkohle Rückstände, wie sie in der chemischen Industrie anfallen, insbesondere Destillationsrückstände, wobei solche Ausgangsmaterialien die folgenden Voraussetzungen erfüllen müssen, damit gute Ausbeuten an Aktivkohle erzielt werden können:
- Die Ausgangsmaterialien sollten bereits Verbindungen mit aromatischen Kohlenstoffen und/oder leicht aromatisierende Verbindungen enthalten.
- Es müssen reaktionsfähige Gruppen und/oder Verbindungen im Ausgangsmaterial vorhanden sein oder zumindest eingeführt werden, die bereits ab 200°C, insbesondere ab 300°C, zu Vernetzungen führen. Unter solchen reaktionsfähigen Gruppen oder Verbindungen versteht man erfindungsgemäß beispielsweise die Gruppen -OH, -CHO, reaktives -CH₃, -NCO und Halogenverbindungen, wie z.B. CH₂Cl₂. Als reaktive Gruppe wird insbesondere die Isocyanatgruppe bevorzugt.
- Es müssen auch nach der Vernetzung noch flüchtige Substanzen abgespalten werden können, um das notwendige Porensystem auszubilden, welches durch die bereits erfolgte Vernetzung gehindert wird zu kollabieren, d.h. in sich zusammenzufallen.

Studien der Anmelderin haben jetzt gezeigt, daß insbesondere Destillationsrückstände aus der Diisocyanatherstellung die zuvor genannten Voraussetzungen erfüllen.

Die Anmelderin hat also nun herausgefunden, daß die erfindungsgemäβe Aufgabe überraschenderweise durch ein Verfahren zur Herstellung von korniger, insbesondere kugelförmiger Aktivkohle gelöst werden kann, das die folgenden Verfahrensschritte umfaßt:
(a) Verarbeiten eines aus der Diisocyanatherstellung stammenden Destillationsrückstandes, dem zuvor ein kohlenstoffhaltiger Verarbeitungshilfsstoff sowie gegebenenfalls ein oder mehrere weitere Zusatzstoffe beigemischt worden sind, zu rieselförmigen Körnchen, insbesondere Kügelchen;
(b) anschließend Schwelung der auf diese Weise erhaltenen Körnchen bzw. Kügelchen;
(c) schließlich Aktivierung des geschwelten Produktes.

Somit betrifft die vorliegende Erfindung gleichermaßen ein Verfahren zur Entsorgung und Wiedernutzbarmachung von Destillationsrückständen aus der Diisocyanatproduktion, die ansonsten auf kostenintensive Weise anderweitig entsorgt werden müßten. Die Bedeutung des erfindungsgemäßen Verfahrens wird deutlich, wenn man berücksichtigt, daß z.B. im Jahre 1985 die Weltproduktion nur von Toluoldiisocyanaten auf 748.000 t geschätzt wurde.

Es wurde in unerwarteter Weise gefunden, daß Destillationsrückstände, die bei der Herstellung von Isocyanaten, insbesondere von aromatischen Diisocyanaten, anfallen, ein gutes Ausgangsmaterial für eine abriebfeste, hochwertige Kugelkohle ist. Beispiele hierfür sind Destillationsrückstände aus der Produktion von Toluoldiisocyanaten (Toluylendiisocyanaten, TDI) oder von 4,4'-Methylendi(phenylisocyanaten) (Diphenylmethandiisocyanaten, MDI). Destillationsrückstände beispielsweise aus der Produktion von 1,5-Naphthylendiisocyanaten sind ebenfalls geeignet.

Der bei dem erfindungsgemäßen Verfahren verwendete Destillationsrückstand weist im allgemeinen einen hohen Anteil an aromatischen Kernen und einen Stickstoffgehalt von mindestens etwa 10 Gew.-% auf. Der Stickstoffgehalt im Destillationsrückstand liegt vorzugsweise im Bereich von etwa 10 Gew.-% bis etwa 20 Gew.-%. Das Verhältnis von Aromatkohlenstoffatomen zur Gesamtanzahl von Kohlenstoffatomen in dem Destillationsrückstand C_{Aromat}/Cₜₒₜₐₗ liegt im allgemeinen zwischen 0,6 und 0,9, vorzugsweise oberhalb von 0,7 insbesondere oberhalb von 0,8.

Beispielsweise kann die Ausgangsmischung von Schritt (a) etwa 10 Gew.-% bis etwa 85 Gew.-% eines aromatischen Diisocyanatderivates enthalten.

Isocyanate werden im allgemeinen durch Umsetzung der entsprechenden Amine mit Phosgen in einem geeigneten Lösungsmittel und mehrstufige destillative Aufbereitung hergestellt. Hierbei fällt ein Destillationsrückstand an, der ein Gemisch im wesentlichen aus schweren Kohlenwasserstoffen, nicht mehr abdestillierbaren Isocyanaten und sich von Isocyanaten ableitenden Oligomeren bzw. Polymeren umfaßt. Ein Verfahren zur Herstellung von Isocyanaten und Aufarbeitung des Rückstandes ist beispielsweise in der EP-A2-0 548 685 beschrieben, deren Inhalt hiermit im vollen Umfang durch Bezugnahme eingeschlossen sein soll.

Zur besseren Handhabbarkeit gibt man zu dem Destillationsrückstand aus der Isocyanatproduktion eine bestimmte Menge eines kohlenstoffhaltigen Verarbeitungshilfsstoffes, der ausgewählt ist aus hochsiedenden Kohlenwasserstoffen und Kohlenwasserstoffgemischen wie Bitumen und Asphalten; Pechen (z.B. Rückständen aus der Steinkohlenteerdestillation, sogenanntes "Binderpech" [engl. "binder pitch"] oder Steinkohlenteerpech); thermoplastischen Polymeren (vorzugsweise solche, die aromatische Ringe enthalten); Destillationsrückständen aus der Erdölverarbeitung; und Mischungen der zuvor genannten kohlenstoffhaltigen Verarbeitungshilfsstoffe. Der kohlenstoffhaltige Verarbeitungshilfsstoff ist vorzugsweise derart ausgewählt, daß er unter den Destillationsbedingungen der Isocyanatherstellung inert ist. Der bevorzugte kohlenstoffhaltige Verarbeitungshilfsstoff ist Bitumen. Ganz besonders bevorzugt werden Bitumen, z.B. des Typs B 80, B 80 E, des Typs B 300 oder B 300 E (Kennzeichnung nach DIN 52010).

Vorzugsweise erfolgt die Zugabe des kohlenstoffhaltigen Verarbeitungshilfsstoffes während der destillativen Aufarbeitung des Destillationsrückstandes aus der Diisocyanatproduktion. Beispielsweise kann der am Ende der Diisocyanatherstellung erhaltene Destillationsrückstand in einen gerührten und beheizten Behälter geleitet werden, der teilweise mit dem kohlenstoffhaltigen Verarbeitungshilfsstoff (z.B. Bitumen) gefüllt ist, wonach der Anteil an noch im Rückstand vorhandenen freien Isocyanaten abdestilliert werden kann und der verbleibende Rückstand als rieselfähiger Feststoff, insbesondere als krümelige, freifließende Masse, ausgetragen und abgekühlt werden kann, wie dies in der EP-A-0 548 685 detailliert beschrieben ist. Als Rührreaktor kann hierbei ein normaler Reaktor mit Heizmantel eingesetzt werden, der normalerweise für Hochdruckdampf geeignet ist; andere Heizmittel sind selbstverständlich auch einsetzbar. Dieser Reaktor sollte außerdem über einen großdimensionierten Brüdenaustritt für das abdestillierende Isocyanat sowie sonstige Einlauf- und Hilfseinrichtungen verfügen. Gleichermaßen sollte er mit einem randgängigen Rührer, wie er für hochviskose Produkte in der Literatur vorgesehen wird, ausgerüstet sein, wobei Ankerrührer und Wendelrührer bevorzugt verwendet werden. Vorzugsweise wird dieser Reaktor bei einer Temperatur von 150 °C bis 280 °C, insbesondere von 180 °C bis 230 °C, und unter einem Druck von 2 mbar bis 30 mbar, vorzugsweise von 10 mbar bis 20 mbar, betrieben. Vorzugsweise erfolgt die Destillation aus einem gerührten Sumpfbehälter, an dem sich ein geeignetes Kondensationssystem anschließt, wobei vor Ausführung der Destillation der Reaktor zuerst mit dem kohlenstoffhaltigen Verarbeitungshilfsstoff beschickt wird. Weitere technische Details hierzu sind in der EP-A-0 548 685 beschrieben.

Die Menge an verwendetem kohlenstoffhaltigen Verarbeitungshilfsstoff in der Ausgangsmischung von Schritt (a) kann beispielsweise etwa 5 Gew.-% bis etwa 50 Gew.-% betragen.

Des weiteren können zu der Ausgangsmischung aus Destillationsrückstand und kohlenstoffhaltigem Verarbeitungshilfsstoff noch ein oder mehrere Zusatzstoffe (Additive) hinzugegeben werden. Hierbei kann es sich, wie im folgenden noch im einzelnen dargelegt wird, beispielsweise um die folgenden Zusatzstoffe handeln: Wasser; Emulgator(en); anorganische Materialien, wie z.B. anorganische Adsorptionsmaterialien; Kunststoffe, Kunststoffabfälle und Polymere; katalytisch aktive Metallverbindungen, etc. Selbstverständlich können auch andere, dem Fachmann geläufige Zusatzstoffe hinzugegeben werden, wenn sie sich homogen in die Mischung von Schritt (a) einarbeiten lassen und sich auf den anschließenden Schwel- und Aktivierungsprozeß nicht störend auswirken. Die Zugabe des oder der Zusatzstoffe erfolgt vorzugsweise zusammen mit der Zugabe des kohlenstoffhaltigen Verarbeitungshilfsstoffes, d.h. bei der Aufbereitung und Aufarbeitung des Destillationsrückstandes aus der Diisocyanatherstellung.

Beispielsweise kann durch Zugabe von Wasser zu der Ausgangsmischung in Schritt (a) bereits ein Teil des Isocyanates vernetzt werden. Zumindest ein Teil der zugegebenen Wassermenge kann bereits in dem kohlenstoffhaltigen Verarbeitungshilfsstoff, z.B. Bitumen, vorhanden sein. Beispielsweise kann die vorhandene Wassermenge in der Ausgangsmischung von Schritt (a) mehrere Prozent betragen, z.B. etwa 2 Gew.-% bis etwa 10 Gew.-%.
Auch kann der Ausgangsmischung in Schritt (a), insbesondere zur verbesserten Wasseraufnahme, mindestens ein Emulgator zugesetzt werden; dieser kann bereits in dem kohlenstoffhaltigem Verarbeitungshilfsstoff vorhanden sein.

Des weiteren kann zu der Ausgangsmischung von Schritt (a) ein anorganisches Material, insbesondere ein Adsorptionsmatcrial, hinzugegeben werden. Dieses anorganische Material ist vorzugsweise ausgewählt aus Siliciumdioxiden, Kieselsäureverbindungen, Bleicherde, Molekularsieben oder Aluminiumoxiden. Als anorganische Adsorbentien können auch Bentonite und Silica verwendet werden, jedoch stehen dem Fachmann auch noch weitere Adsorbentien zur Verfügung, sofern sie sich in die Isocyanat/Bitumen-Mischung einarbeiten lassen.

Das anorganische Material kann beispielsweise mit einer katalytisch wirksamen Komponente, vorzugsweise einer Verbindung eines katalytisch aktiven Metalls, imprägniert sein.

Der Gehalt an anorganischem Material im Endprodukt kann etwa 20 Gew.-% bis etwa 80 Gew.-%, vorzugsweise etwa 30 Gew.-% bis etwa 60 Gew.-%, betragen.

Es wurde gefunden, daß z.B. durch Einarbeiten von etwa 10 Gew.-% bis etwa 20 Gew.-% anorganischer, pulveriger Adsorbentien in eine Mischung aus Bitumen und Diphenylmethanpolyisocyanat ein Material erhalten wird, aus welchem sich ein kugelförmiges Adsorbens mit besonderen Eigenschaften herstellen läßt. Als interessante Eigenschaft ist u.a. eine hohe Wasseraufnahme zu erwähnen: Selbst bei etwa 50 Gew.-% Feuchte sind die Kügelchen noch rieselfähig. Im Extremfall können sie unter Umständen bis zu etwa 100 Gew.-% Wasser aufnehmen.

Darüber hinaus führt die Beimengung anorganischer Materialien, insbesondere Adsorptionsmaterialien, zu erhöhten spezifischen Eigenschaften des Endproduktes bezüglich der Adsorption und verleiht ihm katalytische Eigenschaften.

Schließlich können der Ausgangsmischung von Schritt (a) Kunststoffe und/oder Polymere, beispielsweise Polystyrol, vorzugsweise Polystyrolgranulat oder Polystyrolmüll, zugesetzt werden. Die Kunststoffe und/oder Polymere können in Mengen von etwa 10 Gew.-% bis etwa 30 Gew.-% zugesetzt werden. Wenn der Ausgangsmischung vom Schritt (a) Kunststoffe, Kunststoffabfälle oder Polymer zugesetzt werden, dann kann auf die Fremdmaterie in der Mischung (d.h. alles, was kein Isocyanatdestillationsrückstand ist) ein Anteil von bis zu 60 Gew.-% entfallen, bezogen auf das Gesamtgewicht der Ausgangsmischung von Schritt (a).

Da gemäß dem erfindungsgemäßen Verfahren Kunststoffabfälle mitverarbeitet werden können, betrifft die vorliegende Erfindung für diesen Fall gleichermaßen ein Verfahren zur Entsorgung und zum Recycling von Kunststoffmüll, insbesondere Polystyrolmüll.

Der Destillationsrückstand wird, nachdem er durch Zugabe eines kohlenstoffhaltigen Verarbeitungshilfsstoffes (z.B. Bitumen oder "Binderpech") und gegebenenfalls mindestens eines weiteren Zusatzstoffes (Additivs) besser handhabbar gemacht worden ist, zu rieselförmigen Körnchen bzw. Kügelchen verarbeitet.

Diese Verarbeitung kann durch Extrusion mit anschließender Pelletierung erfolgen; solche Verfahren sind beispielsweise aus der Pharmaindustrie bekannt.

Alternativ hierzu kann die Verarbeitung der Mischung zu rieselförmigen Körnchen in Schritt (a) aber auch durch Einwirkung von Scherkräften, insbesondere mittels Rühren, bei zunehmender Viskosität auf die Mischungsmasse erfolgen; so kann beispielsweise in einem Rührreaktor der aus der Isocyanatproduktion stammende Destillationsrückstand nach Versetzen mit dem kohlenstoffhaltigen Verarbeitungshilfsstoff, z.B. Bitumen, so lange durchrührt werden, bis man eine krümelige Masse körniger, insbesondere kugelförmiger Teilchen erhält. Hierzu kann man, wie im vorangehenden Text beschrieben und in der EP-A-0 548 685 detailliert erläutert, beispielsweise den aus dem Destillationsprozeß der Diisocyanatproduktion erhaltenen Rückstand in einen gerührten und beheizten Behälter einleiten, der teilweise mit kohlenstoffhaltigem Verarbeitungshilfsstoff gefüllt ist, wonach der noch im Rückstand vorhandene Anteil an freien Isocyanaten abdestilliert wird und ein rieselfähiger Feststoff in Form einer krümeligen, freifließenden Masse erhalten wird, der anschließend ausgetragen und abgekühlt werden kann.

Die auf diese Weise erhaltenen rieselförmigen Körnchen bzw. Kügelchen weisen im allgemeinen Durchmesser im Bereich von etwa 0,1 mm bis etwa 2,5 mm auf. Typische Kugeldurchmesser betragen etwa 0,6 mm bis etwa 1,5 mm. Die Dichte der Körnchen bzw. Kügelchen kann beispielsweise etwa 1,1 g/cm³ betragen, was zu einem Schüttgewicht von ca. 850 g/l führt.

Das Erstaunliche ist, daß diese Isocyanatpolymer/Pech-Kügelchen problemlos ohne Zusammenbacken z.B. in einem Drehrohr geschwelt werden können. In demselben Drehrohr kann auch anschließend die Aktivierung durchgeführt werden. D.h. Schwelung und Aktivierung können in derselben Apparatur durchgeführt werden und beispielsweise direkt ineinander übergehen, was einen weiteren großen Vorteil des erfindungsgemäßen Verfahrens darstellt.

Die Schwelung (Pyrolyse, Carbonisierung) in Schritt (b) des erfindungsgemäßen Verfahrens kann in inerter oder leicht oxidierender Atmosphäre bei Temperaturen bis zu etwa 800 °C, vorzugsweise bis zu etwa 750 °C, insbesondere bis zu etwa 700 °C, erfolgen. Das Schwelen kann beispielsweise in einem Drehrohr, in Wirbelschicht oder in speziellen Öfen, wie z.B. Röhrenofen ("tubular furnace"), Etagenofen, Schneckengangofen usw., durchgeführt werden.

Es sollte jedoch darauf geachtet werden, daß besonders unterhalb von etwa 250 °C der Vernetzung (d.h. dem Unschmelzbarmachen oder Erhärten) genügend Zeit geboten wird. Hier ist auch die Zugabe von etwas Luft für die Vernetzung förderlich. Bei dieser Vernetzung, d.h. bei dem Unschmelzbarmachen der zähflüssigen Rückstände, sollte die Masse ständig in Bewegung gehalten werden, damit es nicht zu Verklumpungen kommt.

Beispielsweise kann die Schwelung in vorwiegend inerter Atmosphäre (z.B. N₂) durchgeführt werden, die etwa 0,2 Vol.-% bis etwa 4 Vol.-% Sauerstoff enthält. Die Abspaltung von flüchtigen Bestandteilen ist ab etwa 450 °C weitgehend beendet. Ab etwa 600 °C kann es vorteilhaft sein, etwas Wasserdampf zuzugeben, um einer vorzeitigen Graphitisierung entgegenzuwirken.

Bereits in der Verfahrensstufe der Schwelung können innere Oberflächen von bis zu etwa 500 m²/g erreicht werden.

Die Aktivierung in Schritt (c) des erfindungsgemäßen Verfahrens wird in einer dem Fachmann bekannten Weise bei Temperaturen von etwa 700 °C bis etwa 900 °C, vorzugsweise im Bereich von etwa 800 °C bis etwa 850 °C, durchgeführt, wobei vorzugsweise Luft, CO₂ oder Wasserdampf eingeblasen wird.

Beispielsweise kann bei der Wasserdampfaktivierung der vorwiegend inerten Atmosphäre Wasserdampf in einer Menge von etwa 3 Vol.-% bis etwa 50 Vol.-% zugesetzt werden. So kann beispielsweise die Aktivierung mit etwa 25 Vol.-% bis etwa 35 Vol.-% Wasserstoff in N₂ durchgeführt werden.

Obwohl es nicht erforderlich ist, können die zu schwelenden und zu aktivierenden Kügelchen vor der Schwelung und Aktivierung mit einer geringen Menge an Kohlepulver, vorzugsweise eines Pulvers aus Steinkohle oder Aktivkohle, z.B. in Mengen von etwa 0,5 Gew.-% bis etwa 5 Gew.-%, abgepudert werden, um sichere Abhilfe vor einem möglichen Zusammenbacken bei der Schwelung z.B. im Drehrohrofen zu schaffen. Das Kohlepulver kann beispielsweise beim Füllen des Drehrohrofens zugegeben werden und verteilt sich sehr schnell und überzieht die Oberfläche mit einer "trockenen" Schicht, falls einzelne Kügelchen wider Erwarten klebrig werden sollten.

Während der Schwelung und Aktivierung bleibt die Kugelform der Ausgangsmaterialien erhalten. D.h. durch die Formgebung der Ausgangsmaterialien läßt sich gezielt die Teilchengröße des Endproduktes steuern und bestimmen, was einen weiteren Vorteil des erfindungsgemäßen Verfahrens darstellt.

Gemäß dem erfindungsgemäßen Verfahren erhält man in guten Ausbeuten äußerst nützliche, hochwertige, abriebfeste Akuvkohlekügelchen überwiegend aus zu entsorgenden Abfallstoffen, nämlich Destillationsrückständen und gegebenenfalls Kunststoffabfällen, die sonst anderweitig entsorgt, insbesondere verbrannt oder gelagert, werden müßten. Hierin ist - gerade in Zeiten wachsenden Umweltbewußtseins - ein besonderes Verdienst der vorliegenden Erfindung zu sehen. Somit ist Gegenstand der vorliegenden Erfindung gleichermaßen ein Verfahren zur Entsorgung und Wiederaufbereitung von Abfallstoffen, insbesondere Destillationsrückständen und gegebenenfalls Kunststoffabfällen.

Die nach dem erfindungsgemäßen Verfahren der vorliegenden Erfindung hergestellten Aktivkohlekügelchen weisen eine hohe Festigkeit, insbesondere Abriebfestigkeit, auf. Diese körnige, insbesondere kugelförmige Kohle zeichnet sich dadurch aus, daß das Gesamtporenvolumen etwa 0,5 ml/g bis etwa 1,3 ml/g beträgt und zu einem wesentlichen Anteil aus Mikroporen von weniger als 1 nm (10 A) Porendurchmesser, vorzugsweise im Bereich von etwa 0,2 nm (2 A) bis etwa 1 nm (10 A), insbesondere im Bereich von etwa 0,3 nm (3 A) bis etwa 0,7 nm (7 A), besteht. Der Fachmann weiß aber, daß Porenvolumen, Porendurchmesser und Porenverteilung je nach Aktivierungsgrad variieren. Somit läßt sich durch Wahl der Aktivierungsbedingungen gezielt die Oberflächen- und Porenstruktur des Endproduktes definieren.

Das nach dem erfindungsgemäßen Verfahren hergestellt Adsorptionsprodukt hat einen Teilchendurchmesser im Bereich von etwa 0,1 mm bis etwa 2,0 mm, vorzugsweise von etwa 0,2 mm bis etwa 1,0 mm. Die innere Oberfläche (BET) der Teilchen liegt im Bereich von etwa 600 m²/g bis etwa 1.500 m²/g, vorzugsweise im Bereich von etwa 900 m²/g bis etwa 1.200 m²/g.

Die erfindungsgemäß hergestellten Adsorptionsmaterialien zeigen eine hohe Abriebfestigkeit. Die Aktivkohlekörnchen oder -kügelchen können bei einem Durchmesser von etwa 0,5 mm mindestens einer Kraft von etwa 5 N, vorzugsweise von etwa 10 N, standhalten.

Die nach dem erfindungsgemäßen Verfahren hergestellten Aktivkohlekügelchen zeigen gute bis ausgezeichnete Adsorptionseigenschaften. Es wurde weiter gefunden, daß sie eine gegenüber normaler Aktivkohie erhöhte Affinität für saure Gase haben, was dem in den Aromatsystemen eingebauten Stickstoff zuzuschreiben ist. Die erfindungsgemäß hergestellten Aktivkohlekügelchen sind also als Adsorptionsmaterialien aufgrund der Vielzahl ihrer Eigenschaften in der Summe betrachtet besonders geeignet.

Das gemäß dem erfindungsgemäßen Herstellungsprozeß erhaltene Aktivkohleprodukt kann eine katalytisch wirksame Komponente, vorzugsweise eine Verbindung eines katalytisch aktiven Metalls, umfassen. Solche Materialien können beispielsweise durch Einarbeiten anorganischer Adsorptionsmaterialien (z.B. Kieselgel, Aluminiumoxid etc.) in die Anfangsmischung von Schritt (a) hergestellt werden, weil sich solche Adsorptionsmaterialien wegen ihrer ausgeprägten Hydrophilie gut mit katalytisch wirksamen Metallverbindungen imprägnieren lassen. Die auf diese Weise erfolgte Imprägnierung ist auch im Innern der Aktivkohlekügelchen gut verteilt und zugänglich. Die Porenstrukturen des Aktivkohleanteils bleiben weitgehend zugänglich, weil sie nicht durch die Imprägnierung verstopft sind. Selbstverständlich kann alternativ hierzu auch das Endprodukt aus dem erfindungsgemäßen Verfahren mit der katalytisch wirksamen Komponente imprägniert werden.

Beachtlich ist auch das außerordentlich hohe Wasseraufnahmevermögen der nach dem erfindungsgemäßen Verfahren Aktivkohlekügelchen, insbesondere wenn sie anorganische Adsorptionsmaterialien umfassen. Diese können bis zu etwa 50 Gew.-% Wasser, vorzugsweise sogar bis zu etwa 100 Gew.-% Wasser, adsorbieren, wovon ein hoher Anteil bei einer relativen Feuchte RF = 50% wieder abgegeben werden kann.

Das hohe Wasseraufnahmevermögen der erfindungsgemäß hergestellten Aktivkohle eröffnet neue Möglichkeiten. So lassen sich mit der in den Aktivkohlekügelchen gespeicherten bzw. adsorbierten Feuchte feuchtigkeitsvernetzende Polyisocyanatklebstoffe ohne Erwärmen aushärten, um die Aktivkohlekügelchen auf diese Weise auf hitzeempfindlichen Trägerstrukturen zu fixieren. Das Ausführungsbeispiel 6 verdeutlicht diese Verwendungsmöglichkeit der erfindungsgemäß hergestellten Aktivkohle.

Beispielsweise beschreibt die DE-A-38 13 563 Adsorptionsfilter mit hoher Luftdurchlässigkeit und sehr guter Kinetik, wobei auf einer dreidimensionalen, offenporigen Trägermatrix mit Hilfe einer wärmehärtbaren Haftmasse körnige Adsorbentien mit Teilchengrößen ≤ ca. 1 mm fixiert werden; das Aushärten der Haftmasse verlangt eine thermische Behandlung, die viele Träger nicht aushalten, weil sie bei Erwärmung einspringen.

Unter Verwendung der erfindungsgemäß hergestellten Aktivkohlekügelchen lassen sich zusammen mit Haftmassen auf Basis polymerer Isocyanate, die ohne Erwärmen unter Feuchtigkeitseinwirkung vernetzen, auch thermisch wenig stabile Trägerstrukturen mit Adsorbentien beladen, weil die erfindungsgemäß hergestellten Aktivkohlekügelchen Wasser an den Polyisocyanatkleber abgeben, der ohne thermische Nachbehandlung vernetzt. Selbstverständlich kann die Fixierung der erfindungsgemäß hergestellten Aktivkohleteilchen an die Trägerstruktur auch mit anderen, dem Fachmann geläufigen Haftmassen und Klebstoffen erfolgen.

Gegenstand der vorliegenden Erfindung ist somit auch die Verwendung der nach dem erfindungsgemäßen Verfahren hergestellten Aktivkohlekügelchen bzw. -körnchen zur Herstellung von Adsorptionsmaterialien, wie beispielsweise Adsorptionsfiltern, Filtermatten, Geruchsfiltern, Flächenfilter fiir Schutzanzüge gegen chemische Gifte und Filter für die Raumluftreinigung. Die erfindungsgemäß hergestellten Materialien können folglich zur Herstellung von adsorptionsfähigen Trägerstrukturen verwendet werden, die damit beladen sind.

Die folgenden Beispiele veranschaulichen die vorliegende Erfindung, ohne sie jedoch zu beschränken. Dem Fachmann werden beim Lesen der Beispiele weitere Ausgestaltungen denkbar erscheinen, ohne daß er damit den Rahmen der vorliegenden Erfindung verläßt.

### Beispiel 1

Ein oligomerer Destillationsrückstand aus der Diisocyanatherstellung mit einem CAromat/Ctotal-Verhältnis von ca. 0,8 und einem hohem Isocyanatanteil (ca. 15 Gew.-% N) wurde mit Bitumen, welches 5 Gew-% Wasser enthält, in einem Verhältnis von 5 : 1 vermischt. Die zähe Masse wurde zu Strängen von ca. 0,8 mm Durchmesser extrudiert und mittels eines Marumerizers unter Zugabe von ca. 2 Gew.-% Pulverkohle im wesentlichen zu Kügelchen von etwa 0,8 mm bis etwa 1,5 mm Durchmesser pelletiert.
Die Kügelchen wurden anschließend in einem Labordrehrohr der Fa. Plecq in Gegenwart von Luft innerhalb von 2 Stunden auf 300 °C gebracht, wodurch sie unschmelzbar wurden, und in 2 Stunden unter Stickstoff auf 750 °C gebracht. Dabei entstand ein Gewichtsverlust von ca. 50 %. Das pyrolysierte Produkt wurde bei 850 °C mit 25 Vol.-% H₂O in Stickstoff während 2 Stunden aktiviert. Dabei entstand ein weiterer Gewichtsverlust von ca. 30 %, so daß die Ausbeute an Aktivkohle ca. 20 % betrug. Die kugelförmige Aktivkohle hatte ein Schüttgewicht von 520 g/l, einen Durchmesser von ca. 0,5 mm bis ca. 1,0 mm und eine spezifische Oberfläche von 1.150 g/m² (BET-Methode).

### Beispiel 2

Ein Polystyrolgranulat wurde mit der halben Menge Bitumen aufgeschmolzen und mit der gleichen Menge des oligomeren, Isocyanat enthaltenden Rückstands des Beispiels 1 unter leichter Erwärmung vermischt. Weiter wurde wie im Beispiel 1 verfahren. Die Ausbeute an Aktivkohle betrug etwa 16 %.

### Beispiel 3

25 Teile Polystyrol-Abfälle wurden in 25 Teile Steinkohlenteerpech aufgeschmolzen und mit 50 Teilen eines Destillationsrückstandes aus der Diphenylmethandiisocyanatherstellung versetzt. Die Masse wurde warm extrudiert und mittels eines Marumerizers zu Kügelchen mit Durchmessern von 0,3 mm bis 2,0 mm geformt. Die Schwelung erfolgte in einem 20-Liter-Drehrohr der Fa. Plecq. Es wurde in 60 Minuten auf 150 °C unter N₂-Atmosphäre unter Zugabe von ca. 10 % Luft angeheizt und bei dieser Temperatur 60 Minuten verweilt. Danach wurde mit 3 °C/Minute auf 450 °C und mit 5 °C /Minute auf 700 °C aufgeheizt. Ab 600 °C wurden ca. 5 % Wasserdampf zugegeben. Der Pyrolyserückstand betrug 40 %, das Schüttgewicht lag bei ca. 910 g/l. Die Aktivierung wurde im gleichen Drehrohr bei 850 °C mit 25 % Wasserdampf in N₂ während 120 Minuten durchgeführt. Es wurde in einer Ausbeute von etwa 18 % eine hochwertige, abriebfeste Kugelkohle mit einer inneren Oberfläche (BET) von etwa 1.250 m²/g erhalten.

### Beispiel 4

Ein aus der Produktion aromatischer Diisocyanate stammender Destillationsrückstand wurde mit einer Menge von 20 Gew.-% "Binderpech" versetzt und anschließend nach Extrudieren durch ein Pelletierverfahren in Kügelchen von 0,6 mm bis 1,0 mm umgesetzt. Die Dichte der Kügelchen betrug ca. 1,1 g/cm3, was zu einem Schüttgewicht von ca. 850 g/l führte. Die auf diese Weise erhaltenen Polymer/Pech-Kügelchen konnten problemlos ohne Zusammenbacken in einem Labordrehrohr geschwelt werden, wobei bei einer Endtemperatur von 785°C Pyrolyserückstände von 50 % bis 60 % gefunden wurden. Im gleichen Drehrohr wurde anschließend bei 850 °C mit 25 % Wasserdampf in Stickstoffatmosphäre während 40 Minuten aktiviert. Es resultierte eine in etwa runde Kugelkohle guter Qualität (BET-Oberfläche: 1.200 m²/g; Teilchendurchmesser: 0,55 mm bis 0,85 mm) in einer Ausbeute von durchschnittlich 50 %, bezogen auf geschweltes Material.

### Beispiel 5

Zu einem Destillationsrückstand aus der Diphenylmethandiisocyanatherstellung, dem zuvor 20 % Bitumen beigemischt worden war, wurden 10 % bzw. 20 % anorganische, pulverige Adsorbentien (Aluminiumoxid) eingearbeitet. Eine Wassermenge von 2 bis 10 % ließ sich problemlos in diese Mischung einemulgieren. Man erhielt ein Material, aus welchem sich ein kugelförmiges Adsorbens mit besonderen Eigenschaften herstellen ließ. Durch Extrudieren der pastenartigen Mischung und Pelletieren der ca. 0,5 mm dicken Stränge wurden ca. 0,6 mm bis 1 mm große Kügelchen hergestellt (Selbstverständlich lassen sich beim Pelletieren auch größere Kugeln herstellen, sinnvoll sind jedoch solche mit Durchmessern ≤ 2 mm, insbesondere ≤ 1 mm.). Die Feuchtigkeit wirkte sich auch vorteilhaft auf den Vernetzungsprozeß aus, weil die Kügelchen bereits ohne Erwärmung eine hohe Festigkeit erreichten.
Anschließend wurden sie in Wirbelschicht bis ca. 700 °C geschwelt und bei ca. 850 °C mit Wasserdampf aktiviert. Die ca. 0,4 mm bis 0,8 mm großen Kügelchen wurden in einer Ausbeute von 43 % erhalten, hatten eine innere Oberfläche (BET) von ca. 1.200 m²/g und ein Porenvolumen von ca. 1 ml/g bis 1,3 ml/g.
Als interessante Eigenschaft des Endproduktes ist ein hohes Wasseraufnahmevermögen zu erwähnen. Selbst bei 50 % Feuchte waren die Kügelchen noch rieselfähig und nahmen im Extremfall bis 100 % Wasser auf.

### Beispiel 6

Ein grobes, offenes Polypropylen-Vlies wurde mit einer Polyisocyanatbeschichtungsmasse der BAYER AG (Levacast 43131 N) abgequetscht (Abquetscheffekt ca. 100 %) und mit den erfindungsgemäß hergestellten kugelförmigen Adsorbentien aus Beispiel 5, deren Feuchtegehalt 50 % betrug, beladen. Letztere gaben Wasser an den Polyisocyanatkleber ab, so daß er ohne thermische Nachbehandlung vernetzte.
Es resultierte eine Filtermatte mit einer Beladung von ca. 500 g Adsorbentien/m², die sich als Geruchsfilter für Dunstabzugshauben hervorragend eignete. Gleichzeitig wurde festgestellt, daß die Matte bei hoher Wasserdampfzufuhr diesen aufnahm, um ihn bei geringerer Wasserdampfzufuhr wieder abzugeben. Auf diese Weise können z.B. die beim Kochen auftretenden "Wasserdampfspitzen", die zum Beschlagen von Fenstern, Spiegeln, Kacheln und dergleichen führen, abgebaut werden.

### Beispiel 7

Ein Rückstand aus der Toluoldiisocyanatproduktion wurde mit ca. 15 Gew.-% Bitumen versetzt und, wie in den vorangehenden Beispielen beschrieben, zu Kügelchen von 0,4 mm bis 2 mm Durchmesser verarbeitet, die einen Stickstoffanteil von 15 Gew.-% bis 20 Gew.-% aufwiesen.
Die Kügelchen wurden in einem Drehrohr bis zu einer Endtemperatur von 750°C (6,25°C/Minute bis 750°C, dann 60 Minuten bei 750°C) geschwelt, wobei die Ausbeute ca. 50 % betrug. Um während des Schwelens die Bildung größerer Mengen eines Kondensates in den Abgasleitungen des Drehrohres zu vermeiden, wurden diese auf 350 °C aufgeheizt.
Anschließend wurde in einen "Vertical Tubular Kiln" der Fa. Combustion Air bei 850 °C während 65 Minuten mit einem Gemisch aus 25 % H₂O und 75 % N₂ bis zu einer inneren Oberfläche von 1.050 m²/g aktiviert. Die Gesamtausbeute sank auf 23 %. Die Schüttdichte betrug ca. 800 g/l und die Teilchengröße 0,3 mm bis 0,75 mm.
Eine innere Oberfläche (BET) von 1.350 m²/g bis 1.400 m²/g konnte durch Verdoppelung der Aktivierungszeit erreicht werden, wobei allerdings die Ausbeute auf 10 % sank und die Teilchengröße weiter reduziert wurde (0,25 mm bis 0,6 mm).

## Patentansprüche

1. Verfahren zur Herstellung von körniger, insbesondere kugelförmiger Aktivkohle, das die folgenden Verfahrensschritte umfaßt:
(a) Verarbeitung einer Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfaßt, zu rieselförmigen Körnchen;
(b) anschließend Schwelung der auf diese Weise erhaltenen Körnchen; und
(c) schließlich Aktivierung des geschwelten Produktes.

2. Verfahren nach Anspruch 1, bei dem der Destillationsrückstand einen hohen Anteil an aromatischen Kernen und einen Stickstoffgehalt von mindestens etwa 10 Gew.-% aufweist.

3. Verfahren nach Anspruch 2, bei dem der Stickstoffgehalt im Destillationsrückstand im Bereich von etwa 10 Gew.-% bis etwa 20 Gew.-% liegt.

4. Verfahren nach einem der Ansprüche 1 bis 3, bei dem das Verhältnis von Aromatkohlenstoffatomen zu der Gesamtanzahl von Kohlenstoffatomen in dem Destillationsrückstand C_{Aromat}/C_{tocal} mindestens etwa 0,6, vorzugsweise mindestens 0,7, insbesondere mindestens 0,8, beträgt.

5. Verfahren nach einem der Ansprüche 1 bis 4, bei dem der Destillationsrückstand aus der Produktion von Toluoldiisocyanaten (Toluylendiisocyanaten, TDI), 4,4'-Methylendi(phenylisocyanaten) (Diphenylmethandiisocyanaten, MDI) und/oder 1,5-Naphthylendiisocyanaten stammt.

6. Verfahren nach einem der Ansprüche 1 bis 5, bei dem die Mischung von Schritt (a) etwa 10 Gew.-% bis etwa 85 Gew.-% eines aromatischen Diisocyanatderivates enthält.

7. Verfahren nach einem der Ansprüche 1 bis 6, bei dem der kohlenstoffhaltige Verarbeitungshilfsstoff ausgewählt ist aus hochsiedenden Kohlenwasserstoffen und Kohlenwasserstoffgemischen wie Bitumen und Asphalten; Pechen wie Steinkohlenteerpech; thermoplastischen Polymeren; Destillationsrückständen aus der Erdölverarbeitung; und deren Mischungen.

8. Verfahren nach einem der Ansprüche 1 bis 7, bei dem die Menge an kohlenstoffhaltigem Verarbeitungshilfsstoff in der Mischung von Schritt (a) etwa 5 Gew.-% bis etwa 50 Gew.-% beträgt.

9. Verfahren nach einem der Ansprüche 1 bis 8, bei dem zu der Mischung von Schritt (a) Wasser hinzugegeben wird.

10. Verfahren nach Anspruch 9, bei dem zumindest ein Teil der Wassermenge bereits in dem kohlenstoffhaltigen Verarbeitungshilfsstoff vorhanden ist.

11. Verfahren nach Anspruch 9 oder 10, bei dem das Wasser in der Mischung von Schritt (a) in Mengen von mehreren Prozent, vorzugsweise von etwa 2 Gew.-% bis etwa 10 Gew.-%, vorhanden ist.

12. Verfahren nach einem der Ansprüche 1 bis 11, bei dem man zu der Mischung in Schritt (a) mindestens einen Emulgator hinzugibt.

13. Verfahren nach einem der Ansprüche 1 bis 12, bei dem zu der Mischung in Schritt (a) ein anorganisches Material, vorzugsweise ein anorganisches Adsorptionsmaterial, hinzugegeben wird.

14. Verfahren nach Anspruch 13, bei dem das anorganische Material ausgewählt ist aus Siliciumdioxiden, Silica, Kieselsäureverbindungen, Bleicherde, Molekularsieben, Bentoniten oder Aluminiumoxiden.

15. Verfahren nach Anspruch 13 oder 14, bei dem das anorganische Material mit einer katalytisch wirksamen Komponente, vorzugsweise einer Verbindung eines katalytisch aktiven Metalls, imprägniert ist.

16. Verfahren nach einem der Ansprüche 13 bis 15, bei dem der Gehalt an anorganischem Material im Endprodukt etwa 20 Gew.-% bis etwa 80 Gew.-%, vorzugsweise etwa 30 Gew.-% bis etwa 60 Gew.-%, beträgt.

17. Verfahren nach einem der Ansprüche 1 bis 16, bei dem der Mischung in Schritt (a) Kunststoffe, Kunststoffmüll und/oder Polymere wie Polystyrol, vorzugsweise Polystyrolgranulat oder Polystyrolmüll, zugesetzt werden.

18. Verfahren nach Anspruch 17, bei dem die Kunststoffe und/oder Polymere in Mengen von etwa 10 Gew.-% bis etwa 30 Gew.-% zugesetzt werden.

19. Verfahren nach einem der Ansprüche 1 bis 18, bei dem die Verarbeitung der Mischung zu rieselförmigen Körnchen in Schritt (a) durch Extrusion und Pelletierung erfolgt.

20. Verfahren nach einem der Ansprüche 1 bis 18, bei dem die Verarbeitung der Mischung zu rieselförmigen Körnchen in Schritt (a) durch Einwirkung von Scherkräften, insbesondere mittels Rühren, bei zunehmender Viskosität auf die Mischungsmasse erfolgt.

21. Verfahren nach einem der Ansprüche 1 bis 20, bei dem die rieselförmigen Körnchen in Schritt (a) Durchmesser im Bereich von etwa 0,1 mm bis etwa 2,5 mm aufweisen.

22. Verfahren nach einem der Ansprüche 1 bis 21, bei dem die Schwelung in Schritt (b) in inerter oder leicht oxidierender Atmosphäre bei Temperaturen bis zu etwa 800°C, vorzugsweise bis zu etwa 750°C, insbesondere bis zu etwa 700°C, erfolgt.

23. Verfahren nach Anspruch 22, bei dem die Schwelung in vorwiegend inerter Atmosphäre durchgeführt wird, die etwa 0,2 Vol.-% bis etwa 4 Vol.-% Sauerstoff enthält.

24. Verfahren nach Anspruch 22 oder 23, bei dem bereits in der Verfahrensstufe (b) der Schwelung innere Oberflächen von bis zu 500 m²/g erreicht werden können.

25. Verfahren nach einem der Ansprüche 1 bis 24, bei dem die Aktivierung in Schritt (c) bei einer Temperatur im Bereich von etwa 700°C bis etwa 900°C, vorzugsweise im Bereich von etwa 800°C bis etwa 850°C, durchgeführt wird.

26. Verfahren nach Anspruch 25, bei dem die Aktivierung in überwiegend inerter Atmosphäre durchgeführt wird, der Luft, Kohlendioxid und/oder Wasserdampf zugesetzt wird.

27. Verfahren nach einem der Ansprüche 1 bis 26, bei dem die Schwelung (Stufe (b)) und Aktivierung (Stufe (c)) in derselben Apparatur durchgeführt werden und ineinander übergehen.

## Claims

1. Method for producing granular, specially spherical active coal, comprising the following method steps:
(a) processing a mixture comprising a distillation residue from the production of diisocyanate, a carbonaceous processing adjuvant and eventually one or several other additives; the processing being used to obtain small trickling granules;
(b) afterwards low temperature carbonisation of the granules obtained in this manner ; and
(c) at last, the activation of the product carbonised at a low temperature .

2. Method according to claim 1, whereby the distillation contains a high fraction of aromatic cores and a content of nitrogen of at least approximately 10% by weight.

3. Method according to claim 2, whereby the content of nitrogen is situated in the area between approximately 10% by weight and approximately 20% by weight.

4. Method according to one of the claims 1 to 3, whereby the ratio C_{Aromat}/Cₜₒₜₐₗ between the aromatic carbon atoms and the total number of carbon atoms is in the distillation residue of approximately 0,6, preferably, at least of 0,7%, especially at least 0,8.

5. Method according to one of the claims 1 to 4, whereby the distillation residue is coming from the production of toluol- diisocyanates (toluylendiisocyanates, TDI) , 4,4 - methylen - di - (phenyleisocyanates) (Diphenylmethandiisocyanate, MDI), and / or 1,5-naphthylendiisocyanates.

6. Method according to one of the claims 1 to 5, whereby the mixture of step (a) contains approximately from 10% by weight to 85% by weight of an aromatic diisocyanate derivative.

7. Method according to one of the claims 1 to 6, whereby the processing adjuvant containing carbon is chosen from hydrocarbons with a high boiling point and hydrocarbon mixtures such as bitumen and asphalt; pitch such as coal tar pitch ; thermoplastic polymers ; distillation residues from the petroleum processing.

8. Method according to one of the claims 1 to 7, whereby the processing adjuvant's quantity containing carbon is in the mixture of step (a) from approximately 5% by weight to approximately 50% by weight.

9. Method according to one of the claims 1 to 8, whereby water is added to the mixture of step (a).

10. Method according to claim 9, whereby at least one part of the water already exists in the processing adjuvant containing carbon.

11. Method according to claim 9 or 10 whereby water exists in the mixture of the step (a) in quantities of several percents, preferably from approximately 2% by weight to 10% by weight.

12. Method according to one of the claims 1 to 11, whereby at least one emulgator is added to the mixture of the step (a).

13. Method according to one of the claims 1 to 12, whereby an inorganic material is added, preferably an inorganic adsorption material, to the mixture of the step (a).

14. Method according to claim 13, whereby the inorganic material is selected from silicon dioxide, silica, Fuller's earth, molecular sieves, bentonites or aluminium oxides.

15. Method according to claim 13 or 14, whereby the inorganic material is impregnated with a catalytically active component , preferably a compound of a catalytically active metal.

16. Method according to one of the claims 13 to 15, whereby the content of inorganic material in the final product is approximately 20% by weight to approximately 80% by weight, preferably approximately 30 % by weight to approximately 60 % by weight.

17. Method according to one of the claims 1 to 16, whereby to the plastics, plastic waste and / or polymers like polystyrene, preferably polystyrene granulates or polystyrene waste are added to the mixture of step (a).

18. Method according to claim 17, whereby to the plastics and / or polymers are added in quantities of approximately 10 % by weight to approximately 30 % by weight.

19. Method according to one of the claims 1 to 16, whereby the processing of the mixture in step (a) results in the forming of trickling granules by means of extrusion and granulation.

20. Method according to one of the claims 1 to 18, whereby the processing of the mixture in step (a) is processed into trickling granules by the action of shear forces on the mixture with increasing viscosity, especially by means of agitation.

21. Method according to one of the claims 1 to 20, whereby the trickling granules of step (a) have diameters between approximately 0,1 mm and approximately 2,5mm.

22. Method according to one of the claims 1 to 21, whereby the low-temperature carbonisation of step (b) occurs in an inert or easily oxidising atmosphere at temperatures up to approximately 800°C, preferably up to approximately 750°C, especially up to approximately 700°C.

23. Method according to claim 22, whereby the low-temperature carbonisation occurs preferably in an inert atmosphere containing approximately 0,2 % by volume of oxygen to approximately 4 % by volume of oxygen.

24. Method according to claim 22 or 23, whereby already in the processing step (b) of the low-temperature carbonisation inner surfaces of up to 500 m²/g are obtained.

25. Method according to one of the claims 1 to 24, whereby the activation in step (c) is realised at a temperature between approximately 700 °C to approximately 900 °C and preferably between approximately 800°C and approximately 850°C.

26. Method according to claim 25, whereby the activation is realised in a substantially inert atmosphere to which air, carbon dioxide and / or water are added.

27. Method according to one of the claims 1 to 26, whereby the low-temperature carbonisation (step (b)) and the activation (step(c)) are realised in the same apparatus and are merging.

## Revendications

1. Procédé pour fabriquer du charbon actif granuleux, notamment sphérique, comportant les étapes de procédé suivantes :
(a) traitement d'un mélange comportant un résidu de distillation en provenance de la production de diisocyanate, un adjuvant de traitement comportant du carbone et éventuellement un ou plusieurs autres additifs, ce traitement servant à obtenir des granules ruissellants ;
(b) carbonisation ultérieure à basse température des petites graines obtenues de cette manière ; et
(c) au final, activation du produit carbonisé à basse température.

2. Procédé selon la revendication 1, dans lequel le résidu de distillation contient un taux élevé de noyaux aromatiques et une teneur en azote d'au moins environ 10 % en poids.

3. Procédé selon la revendication 2, dans lequel la teneur en azote se situe dans la zone entre environ 10% en poids et environ 20% en poids.

4. Procédé selon une des revendications 1 à 3, dans lequel le rapport entre les atomes de carbone aromatique et le nombre total d'atomes de carbone C_{Aromat}/Cₜₒₜₐₗ s'élève dans le résidu de distillation à environ 0,6, de préférence, à au moins 0,7, notamment au moins 0,8.

5. Procédé selon une des revendications 1 à 4, dans lequel le résidu de distillation vient de la production des diisocyanates de toluène.(diisocyanates de toluylène,TDI), des 4,4-méthylène-di-(phénylisocyanates) (diphenylmethanediisocyanate ,MDI ) et / ou des 1,5-diisocyanates de naphtylène.

6. Procédé selon une des revendications 1 à 5, dans lequel le mélange de l'étape (a) contient environ 10 % en poids jusqu'à environ 85 % en poids d'un dérivé de diisocyanate aromatique.

7. Procédé selon une des revendications 1 à 6, dans lequel l'adjuvant de traitement contenant du carbone est sélectionné à partir d'hydrocarbures à haut point d'ébullition. et des mélanges d'hydrocarbure comme les bitumes et les asphaltes ; les poix comme le brai de houille ; les polymères thermoplastiques ; les résidus de distillation en provenance du traitement de pétrole et leurs mélanges.

8. Procédé selon une des revendications 1 à 7, dans lequel la quantité d'adjuvant de traitement contenant du carbone s'élève dans le mélange de l'étape (a) à environ 5% en poids jusqu'à environ 50% en poids.

9. Procédé selon une des revendications 1 à 8, dans lequel on ajoute au mélange de l'étape (a) de l'eau.

10. Procédé selon la revendication 9, dans lequel au moins une partie de la quantité d'eau existe déjà dans l'adjuvant de traitement contenant du carbone.

11. Procédé selon la revendication 9 ou 10, dans lequel l'eau dans le mélange de l'étape (a) existe dans des quantités de plusieurs pourcents, de préférence, d'environ 2% en poids jusqu'à environ 10% en poids.

12. Procédé selon une des revendications 1 à 11, dans lequel on ajoute au mélange de l'étape (a) au moins un émulgateur.

13. Procédé selon une des revendications 1 à 12, dans lequel on ajoute au mélange de l'étape (a) une matière anorganique, de préférence, une matière d'adsorption anorganique.

14. Procédé selon la revendication 13, dans lequel on choisit la matière anorganique à partir de dioxides de silicium, de silica, des composés d'acide silicique, d'argile absorbante, des tamis moléculaires, des bentonites ou des oxides d'aluminium.

15. Procédé selon une des revendications 13 ou 14, dans lequel la matière anorganique est imprégnée d'un composant agissant de façon catalytique, de préférence, d'un composé d'un métal catalytiquement actif.

16. Procédé selon une des revendications 13 à 15, dans lequel la teneur en matière anorganique dans le produit final est d'environ 20% en poids jusqu'à environ 80% en poids, de préférence entre environ 30% en poids et environ 60% en poids.

17. Procédé selon une des revendications 1 à 16, dans lequel on ajoute au mélange de l'étape (a) des matières plastiques, des déchets de matière plastique et/ou des polymères comme le polystyrène, de préférence des granulés de polystyrène ou des déchets de polystyrène.

18. Procédé selon la revendication 17, dans lequel les matières plastiques et/ou les polymères sont ajoutés à des quantités d'environ 10% du poids jusqu'à 30% en poids.

19. Procédé selon une des revendications 1 à 18, dans lequel le traitement du mélange aboutit à la formation de granules ruisselants à l'étape (a) par extrusion et granulation.

20. Procédé selon une des revendications 1 à 18, dans lequel le traitement du mélange aboutit à la formation de granules ruisselants à l'étape (a) par l'action de forces de cisaillement, notamment en remuant lors de l'augmentation de la viscosité de la masse mélangée.

21. Procédé selon une des revendications 1 à 20, dans lequel les granules ruisselants présentent à l'étape (a) un diamètre se situant entre environ 0,1 mm et environ 2,5 mm.

22. Procédé selon une des revendications 1 à 21, dans lequel la carbonisation à basse température à l'étape (b) a lieu dans une atmosphère inerte ou facilement oxydable à des températures allant jusqu'à environ 800°C, de préférence, jusqu'à environ 750°C, notamment jusqu'à environ 700°C.

23. Procédé selon la revendication 22, dans lequel la carbonisation à basse température est réalisée surtout dans des atmosphères inertes qui contiennent environ 0,2% en volume d'oxygène à environ 4% en volume d'oxygène.

24. Procédé selon la revendication 22 ou 23, dans lequel à l'étape de procédé (b) de la carbonisation à basse température on peut déjà atteindre des surfaces internes jusqu'à 500m²/g.

25. Procédé selon une des revendications 1 à 24, dans lequel l'activation à l'étape (c) est réalisée à une température se situant à environ 700°C jusqu'à environ 900°C, de préférence, à environ 800°C jusqu'à 850°C.

26. Procédé selon la revendication 25, dans lequel l'activation est réalisée dans des atmosphères en majorité inertes auxquelles on ajoute de l'air, du dioxyde de carbone et / ou de la vapeur d'eau.

27. Procédé selon une des revendications 1 à 26, dans lequel la carbonisation à basse température (étape (b)) et l'activation (étape (c)) sont réalisées dans le même appareil et fusionnent entre elles.
